# EUROPEAN PATENT APPLICATION

(11) **EP 4 687 009 A1**
(43) Date of publication of application: **04.02.2026**
(21) Application number: 24192070.1
(22) Date of filing: 31.07.2024
(51) Int. Cl.: G06F 3/01, G06T 19/00

(54) **METHOD AND SYSTEM FOR RENDERING A PERCEPTION OF INTEREST IN EXTENDED REALITY**

(71) Applicant: Siemens Aktiengesellschaft, 80333 München (DE)
(72) Inventor: THIYAGARAJAN, Rajaram, 560102 Bangalore, Karnataka (IN); RAJ, Arun, 635110 Hosur, Tamil Nadu (IN)
(74) Representative: HKW Intellectual Property PartG mbB

(57) **Abstract**

Disclosed is a method (400) for rendering a perception of interest (172) in an Extended Reality (XR) session in real-time. The method (400) includes identifying first perceptions of an object (170) based on capturing the object (170) by a capturing device (180). The method (400) further includes determining one or more users (150) associated with the first perceptions based on correlating predefined users and the first perceptions. Further, the method (400) includes creating a unified perception by combining the first perceptions associated with the one or more users (150). The method includes determining the perception of interest (172) based on the unified perception. The perception of interest (172) is indicative of a view of a targeted component of the object (170). Further, the method (400) includes rendering the perception of interest (172) on a headmounted display (HMD) device (160) associated with each of the one or more users (150).

## Description

The present invention generally relates to Extended Reality (XR), and more particularly relates to a method and system for rendering at least one perception of interest in an Extended Reality (XR) session.

During conventional assisted maintenance or repairing of devices, an expert is physically collocated with a field user to explain and demonstrate by physically manipulating a device. For example, the field user may be a local technician or novice. However, this approach to training or assisting the field user is expensive and time-consuming because the expert technician often travels to a remote location where the field user and the device are located.

In principle, a remote interaction between the expert technician and the field user is a potential solution to this problem. However, information that is exchanged using existing communication techniques is often inadequate for such remotely assisted servicing. For example, during a conference call audio, video, and text or graphical content are typically exchanged by the participants. However, three-dimensional spatial relationship information, such as the spatial interrelationship between components in the device, for instance, assembly of the components is often unavailable.

This is a problem because the expert technician does not have the ability to point and physically manipulate the device during a remote servicing session. Furthermore, the actions of the field user are not readily apparent to the expert technician unless the field user is able to effectively communicate his actions. Typically, relying on the field user to verbally explain his actions to the expert technician and vice versa is not effective because there is a significant knowledge gap between the field user and the expert technician. Consequently, it is often difficult for the expert technician and the field user to communicate and remotely perform the tasks.

Therefore, to overcome the problem discussed above, various technologies came into existence that may render a three-dimensional (3D) environment and attempt to overcome the conventional problems. For example, Virtual Reality (VR) systems render the 3D environment that is presented to a user wearing a head-mounted display. The head-mounted display may include an electronic display screen and optical lenses through which the user views the screen and the displayed 3D environment. The VR system renders the 3D environment stereoscopically on the screen, which creates the illusion of depth for a user when viewed through the lenses of the head-mounted display. Some VR systems provide an immersive user experience, such that the user feels as if he or she is present in the virtual environment. Some VR systems allow the user to look or move around the 3D environment, and to manipulate virtual objects within the 3D environment.

The existing technologies may provide remote virtual environments that may reduce complexity of conventional systems by enabling remote collaboration, thereby saving travel and infrastructure costs that may also directly contribute to a reduction in emissions.

However, the existing technologies result in excessive resource usage during the modelling and rendering of the users and the objects. Further, during the rendering of large and heavy models like aircraft, wind turbines, etc., the existing technologies result in high latency, thereby affecting user experience.

More specifically, the high latency in the existing technologies may impact the performance of systems during remote interaction between users.

In addition, in the existing technologies, an entire real-world scene is rendered in a virtual session. For example- in a motor failure in a feed drive of a milling machine. The entire milling machine along with other components present in the entire real-world scene are rendered in the virtual session.

Therefore, an object of the present invention is to provide a system, an apparatus, and a method for rendering at least one perception of interest in an

Extended Reality session (XR) session that may overcome the above-discussed limitations of the existing technologies.

Throughout the present disclosure, the term **"Extended Reality (XR) session"** herein refers to a virtual or augmented session in which users are represented by avatars in a three-dimensional (3D) environment. The XR session may enable remote interactions between the users present in distinct locations in such a way that the XR session replicates features of real-world. In essence, the users may interact with each other and with objects as if they are together in the real world.

Throughout, the present disclosure, the term **"head-mounted display** (HMD)" herein refers to a display device configured to be worn on a head of the one or more users. The HMD device may include an electronic display screen, lenses, or both, located in front of the eyes of the user wearing the HMD device to present visual content to the user. In some implementations, the HMD device is an XR device that may augment a view of the real-world or a virtual world in the XR session.

Throughout, the present disclosure, the term **"perception** of interest" **or "at least one perception** of interest" herein refers to a view of interest associated with a targeted component that may be rendered in the XR session. The view may include but is not limited to, a front view, a back view, a top view, a bottom view, a perspective view, a three-dimensional (3D) view, and a two-dimensional (2D) of the targeted component. In an embodiment, the at least one perception of interest may be rendered in the HMD device.

Throughout, the present disclosure, the term **"targeted component"** herein refers to a component of interest whose at least one perception of interest may be rendered in the XR session. For instance, in an exemplary scenario, if a fault arises in a motor of a wind turbine, then the motor is treated as the at least one targeted component instead of the wind turbine. Examples of the at least one targeted component may include but are not limited to motor, rotor blades, gears, electric circuit, generator, magnet, fans, etc.

Throughout, the present disclosure, the term **"at least one object"** herein refers to heavy and large models of the industries within the scope of the present invention. For example, the heavy and large models may include but are not limited to aircrafts, wind turbines, ships, or the like. However, the abovementioned examples of the at least one object should not be construed as a limitation of the present invention. In an embodiment, the at least one object may also include small or light models of the industries. For the sake of simplicity and brevity of the invention, the invention is explained with respect to an industrial environment. A person skilled in the art would understand that the concepts disclosed herein may be applied across multiple domains such as finance, marketing, legal, medicine, etc.

Throughout, the present disclosure, the term **"at least one capturing device"** as used herein refers to a primary source for capturing at least one of, a real-world scene and the at least one object in real-time. The at least one capturing device is responsible for collecting real-time visual inputs, which are then processed by a system for creating a three-dimensional model of the at least one of, the real-world scene and the at least one object. In a non-limiting example, the at least one capturing device may include surveillance cameras, thermal cameras, infrared cameras, or any other transmission device equipped with cameras for ad-hoc or supplementary monitoring.

Throughout, the present disclosure, the term, **"real-world scene"** used herein refers to an environment associated with the at least one object present in a physical world.

Throughout, the present disclosure, the term **"one or more first perceptions"** used herein may refer to a plurality of views associated with the at least one object. For example- the plurality of view may include a front view of the at least one object, a back view, a top view, a perspective view, or the like.

Throughout, the present disclosure, the term **"one or more users"** as used herein refers to experts or technicians who may have expertise with at least one object. For example- the at least one object is a wind turbine the one or more users may include persons such as engineers or technicians associated with the wind turbine. In another embodiment, the one or more users may also refer to a human interacting with the system for responses.

Throughout the present disclosure, the term **"avatars"** used herein refers to artificial persons or graphic figures that are assigned to real persons in the XR session. In an embodiment, the avatars are used to represent the one or more users. Avatars may be present, for example, in the form of static images that are assigned to the one or more users in Internet forums. The avatars may also be capable of performing one or more activities in the XR session. Preferably, the avatars of the one or more users may interact with each other. Further, the avatars emulate the movements and facial expressions of the one or more users in a realistic manner.

Throughout the present disclosure, the term **"user persona"** user herein refers to information, specifically a representation of profiles or roles associated with the plurality of predefined users. In an embodiment, if a user is present in a database, then the user persona may include the information such as the role of the user, working experience of the user, ratings of the user, or the like. For example, the user A is a motor engineer, the user A has 15 years of experience, the user A is currently working in XYZ company, or the like information.

Throughout the present disclosure, the term "at **least one unified perception"** user herein refers to at least one common view associated with the at least one object. The at least one unified perception may be displayed on the HMD device associated with each of the one or more users.

Throughout the present disclosure, the term **"rendering"** used herein refers to a process of displaying the at least one perception of interest associated with the at least one targeted component on the HMD device in the XR session. The rendered perception may include accurately depicting an appearance, a shape, a texture, and a lighting of the at least one targeted component in the XR session.

Throughout the present disclosure, the term **"one or more controllers"** used herein refers to equipment that may enable the one or more users to provide input for getting engaged in the XR session. For example- the one or more controllers may include but are not limited to joysticks, keyboard, mouse, or the like.

Throughout the present disclosure, the term **"at least one sensing device"** used herein refers to sensors that may be configured to detect a movement of the one or more users, specifically an eye movement of the one or more users. The at least one sensing device may include motion sensors that may include an accelerometer, a gyroscope, and a magnetometer.

Throughout the present disclosure, the term **"alternative view"** used herein refers to a different view of the at least one targeted component rendered in the XR session. In another embodiment, the alternative view may include a perception of another component of the at least one object.

In an aspect of the present invention, a computer-implemented method for rendering at least one perception of interest in an Extended Reality (XR) session in real-time is disclosed.

The method comprises identifying, by one or more processors, one or more first perceptions of at least one object based on capturing the at least one object by at least one capturing device. The one or more first perceptions are indicative of a plurality of views associated with the at least one object. In an embodiment, the method further comprises obtaining a list of predefined perceptions associated with a real-world scene based on capturing the real-world scene by the at least one capturing device. The method further comprises identifying the one or more first perceptions associated with the at least one object from the list of predefined perceptions based on input received via one or more controllers associated with each of one or more users.

In an advantageous aspect, the one or more first perceptions are identified so that perceptions of only the at least one object in the XR session is displayed to the one or more users.

The method further comprises determining, by the one or more processors, the one or more users associated with the one or more first perceptions based on correlating a plurality of predefined users and the one or more first perceptions.

In an advantageous aspect, the one or more users are experts in the field of the at least one object, that is determined to provide a required response in the XR session. For example, the one or more users may provide guidance on working of a motor to a field user present in the real-world scene associated with the at least one object.

In an embodiment, the method further comprises obtaining, from a database, the plurality of predefined users and associated user personas for each of the plurality of predefined users. Advantageously, the obtaining of the plurality of predefined users may ensure an extraction of information associated with the plurality of predefined users, thereby ensuring an effective way of determining the one or more users.

The method further includes mapping the one or more first perceptions and the user personas associated with the plurality of predefined users using a machine learning model, thereby correlating the plurality of predefined users and the one or more first perceptions. Advantageously, the correlation ensures the determination or selection of the one or more users appropriate for the one or more first perceptions.

Further, the method comprises creating, by the one or more processors, at least one unified perception by combining the one or more first perceptions associated with each of the one or more users. Advantageously, the at least one unified perception is created to reduce the one or more first perceptions, thereby enabling the displaying of a common perception of the at least one object among the one or more users.

The method is followed by determining, by the one or more processors, the at least one perception of interest based on the at least one unified perception, wherein the at least one perception of interest is indicative of a view of at least one targeted component associated with the at least one object. Advantageously, the determination of at least one perception of interest eliminates other perceptions, thereby enabling rendering of a perception of a specific component rather than complex machines or models.

In an embodiment, the method further comprises creating a plurality of second perceptions based on splitting the at least one unified perception associated with the at least one object using the machine learning model. The plurality of second perceptions includes views of one or more components of the at least one object. In an advantageous aspect, the plurality of second perceptions may be created to ensure that at least one targeted component may be identified easily from the plurality of second perceptions.

The method further includes identifying the at least one targeted component from the plurality of second perception and determining the at least one perception of interest associated with the at least one targeted component based on the identification. Advantageously, the identification of the at least one targeted component ensures the elimination of other components associated with the targeted component from rendering in the XR session.

Moreover, the method comprises rendering, by the one or more processors, the at least one perception of interest on a head-mounted display (HMD) device associated with each of the one or more users in the XR session in real-time. Advantageously, the rendering of the at least one perception of interest enables the one or more users to examine the at least one targeted component effectively.

The method further comprises modifying the at least one perception of interest based on tracking movement of the one or more users by at least one sensing device, such that the modified at least one perception of interest includes an alternative view of the at least one targeted component. Advantageously, the modification of the at least one perception of interest may ensure the rendering of the alternative view of the at least one targeted component or another component to achieve a final objective.

The method further includes marking avatars associated with the one or more users viewing the at least one perception of interest in the HMD device. In an advantageous aspect, this enables the determination of information associated with the one or more users. For example- the information may include position of the one or more users, a role associated with the one or more users, or the like.

In various embodiments, the at least one capturing device is in communication with the HMD device and the one or more controllers. Advantageously, the communication enables rendering of the at least one perception of interest in the XR session for the one or more users.

According to another aspect of the present invention, an apparatus for rendering at least one perception of interest in an Extended Reality (XR) session in real-time is disclosed. The apparatus may include a memory and one or more processors communicatively coupled to the memory. The memory includes programmable instructions which, when executed by the one or more processors, cause the one or more processors to perform steps of the method, as discussed throughout the present invention.

According to yet another aspect of the present invention, a system for rendering at least one perception of interest in an Extended Reality (XR) session in real-time is disclosed. The system includes a memory and one or more processors communicatively coupled to the memory. The memory includes programmable instructions executable by the one or more processors. The programmable instructions, when executed by the one or more processors, cause the one or more processors to perform steps of the method, as discussed throughout the present invention.

According to another aspect of the present invention, a computer-program product is disclosed. The computer-program product has machine-readable instructions stored therein, that when executed by one or more processors, cause the one or more processors to perform steps of the method, as discussed throughout the present invention.

According to another aspect of the present invention, a non-transitory computer-readable medium is disclosed. The non-transitory computer-readable medium is encoded with executable instructions, that when executed by one or more processors, cause the one or more processors to perform steps of the method, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 illustrates a block diagram of an environment for implementation of a system for rendering at least one perception of interest in an Extended Reality (XR) session, according to an embodiment of the present invention;
FIG. 2 illustrates a schematic block diagram depicting an exemplary system for rendering the at least one perception of interest in the XR session, according to an embodiment of the present invention;
FIG. 3 illustrates a block diagram depicting a plurality of modules of the system for rendering the at least one perception of interest in the XR session, according to an embodiment of the present invention;
FIG. 4 illustrates a flowchart depicting an exemplary method for rendering the at least one perception of interest in the XR session, according to an embodiment of the present invention;
FIG. 5 illustrates a flowchart depicting sub-steps for correlating a plurality of predefined users and one or more first perceptions, according to an embodiment of the present invention; and
FIG. 6 illustrates a flowchart depicting sub-steps for determining the at least one perception of interest, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

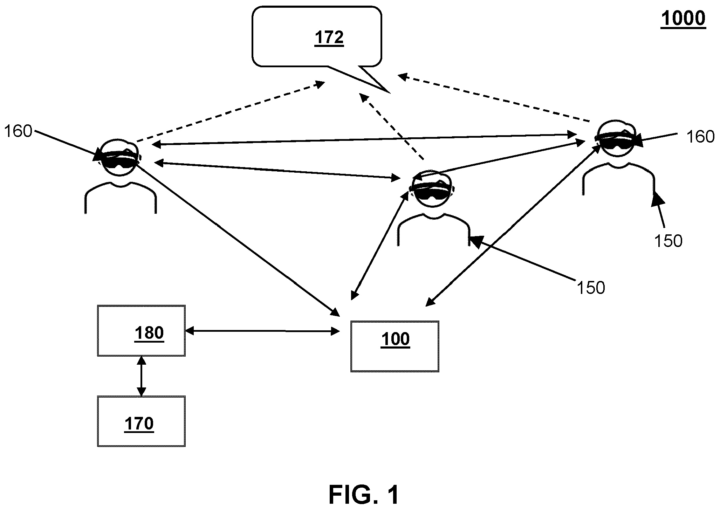

FIG. 1 illustrates a block diagram of an environment 1000 for implementation of a system 100 for rendering at least one perception of interest 172 in an Extended Reality (XR) session, according to an embodiment of the present invention.

The environment 1000 may include but is not limited to the system 100, one or more users 150, a head-mounted display (HMD) device 160 associated with the one or more users 150, at least one object 170, and at least one capturing device 180. In an embodiment, the HMD device 160 may be connected to the system 100 via a network. In an implementation, the network may include a wireless network or a wired network. For example, the network corresponds to cellular networks or mobile networks, such as 3G, 4G, 5G, pre-5G, 6G network, or any other wireless communication network.

In an embodiment, the HMD device 160 is a display device that is configured to be worn on the head of the one or more users 150. The HMD device 160 may include an electronic display screen, lenses, or both, located in front of the eyes of the user wearing the HMD device 160 to present visual content to the user. In some implementations, the HMD device 160 is an XR device that may augment a view of the real-world or a virtual world in the XR session.

In another embodiment, the environment 1000 may also include one or more display devices (not shown in figures) other than the HMD device 160. The one or more display devices may include a desktop monitor (e.g., an LCD or LED display), a television, a mobile phone, or a tablet computing device. In an embodiment, for example, the real-world scene is displayed in the form of a video stream, or images may be presented on an electronic display screen of the one or more display devices.

Referring to FIG. 1, the at least one capturing device 180 may be connected to the system 100 via the network. In one embodiment, the at least one capturing device 180 may be installed in a nearby environment associated with the at least one object 170. The at least one capturing device 180 may be configured to capture or scan at least one of, the real-world scene or the at least one object 170 to create a 2D or a 3D model. The at least one capturing device 180 may include a camera, specifically a depth camera that may use one or more scanning techniques. In an embodiment, the system 100 may be configured to receive captured data associated with the at least one of, the real-world scene, or the at least one object 170 from the at least one capturing device 180 via the network. Preferably, the system 100 may be configured to process the captured data to create the 2D or the 3D model of the at least one of, the real-world scene, or the at least one object 170.

In an exemplary scenario, the at least one capturing device 180 may capture an aircraft. Thereafter, the captured data may be transmitted to the system 100. Thereafter, one or more processors 104 may process the captured data to create the 3D model of the aircraft. Thereafter, the 3D model of the aircraft may be displayed in the HMD device 160.

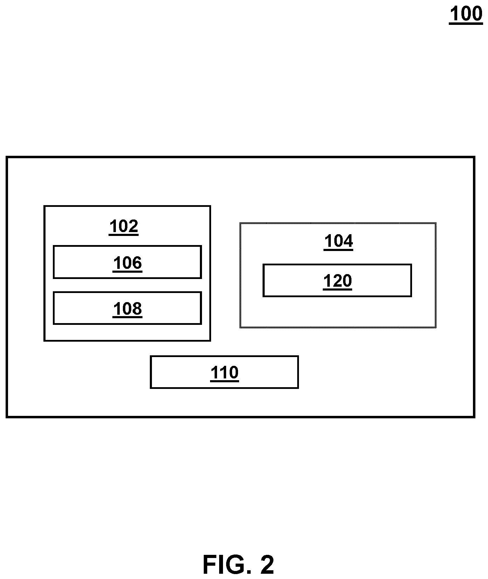

FIG. 2 illustrates a schematic block diagram of an exemplary system 100 for rendering the at least one perception of interest 172, according to an embodiment of the present invention.

The system 100 may include a memory 102 and the one or more processors 104 in communication with the memory 102. As a non-limiting example, the one or more processors 104 are a single processing unit or a set of units each including multiple computing units. The one or more processors 104 are implemented as one or more microprocessors, microcomputers, microcontrollers, digital signal processors, central processing units, state machines, logic circuitries, and/or any devices that manipulate signals based on operational instructions (computer-readable instructions) stored in the memory 102. Among other capabilities, the one or more processors 104 are configured to fetch and execute computer-readable instructions and data stored in the memory 102. The one or more processors 104 include one or a plurality of processors. The plurality of processors is further implemented as a general-purpose processor, such as a central processing unit (CPU), an application processor (AP), or the like, a graphics-only processing unit, such as a graphics processing unit (GPU), a visual processing unit (VPU), and/or an AI-dedicated processor such as a neural processing unit (NPU). The plurality of processors control the processing of the input data in accordance with a predefined operating rule or an artificial intelligence (AI) model stored in the memory 102. The predefined operating rule or the AI model is provided through training or learning.

The one or more processors 104 are disposed in communication with one or more input/output (I/O) devices via an Input/Output (I/O) interface 110. The I/O interface 110 employs communication code-division multiple access (CDMA), high-speed packet access (HSPA+), global system for mobile communications (GSM), long-term evolution (LTE), WiMax, or the like, etc. In another embodiment of the present invention, the I/O interface 110 employs ethernet, industrial wireless Local Area Network (LAN), Process Field Bus (PROFIBUS), Actuator Sensor (AS) Interface, and the like.

In some embodiments, the memory 102 is communicatively coupled to the one or more processors 104. The memory 102 is configured to store instructions executable by the one or more processors 104. In one embodiment, the memory 102 communicates via a bus within the system 100. The memory 102 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 104. In alternative examples, the memory 102 is separate from the one or more processors 104 such as a cache memory of a processor, the system memory, or other memory. The memory 102 is an external storage device or a database 106 for storing data. The memory 102 is operable to store instructions executable by the one or more processors 104. The functions, acts or tasks illustrated in the figures or described are performed by the programmed processor for executing the instructions stored in the memory 102. The functions, acts, or tasks are independent of the particular type of instructions set, storage media, processor or processing strategy and may be performed by software, hardware, integrated circuits, firmware, micro-code, and the like, operating alone or in combination. Likewise, processing strategies include multiprocessing, multitasking, parallel processing, and the like.

Further, the memory 102 includes an operating system 108 for performing one or more tasks of the system 100, as performed by a generic operating system in the communications domain. In one embodiment, the database 106 is configured to store the information as required by the one or more processors 104 to perform one or more functions for rendering the at least one perception of interest 172.

In various embodiments, the system 100 may be a cloud-based system, such as a cloud server. In such an embodiment, the functionality of the system 100 may be provided by the cloud server, and the details provided with respect to the system 100 would be applicable for the cloud server. In another embodiment, the system 100 may be hosted on one or more electronic devices such as user equipment (UE). In an embodiment, the system 100 is provided in a distributed manner, in that, one or more components and/or functionalities of the system 100 are provided through an electronic device, and one or more components and/or functionalities of the system 100 are being provided through a cloud-based unit, such as a cloud storage or a cloud-based server. In a non-limiting example, the database 106 may be provided through the cloud storage and the one or more processors 104 may be integrated with the one or more electronic devices.

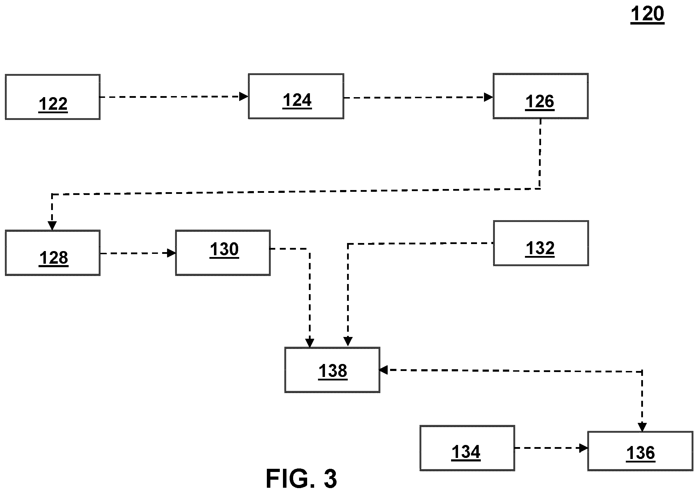

In an embodiment of the present invention, the one or more processors 104 may include a plurality of modules 120 that are discussed in conjunction with FIG. 3.

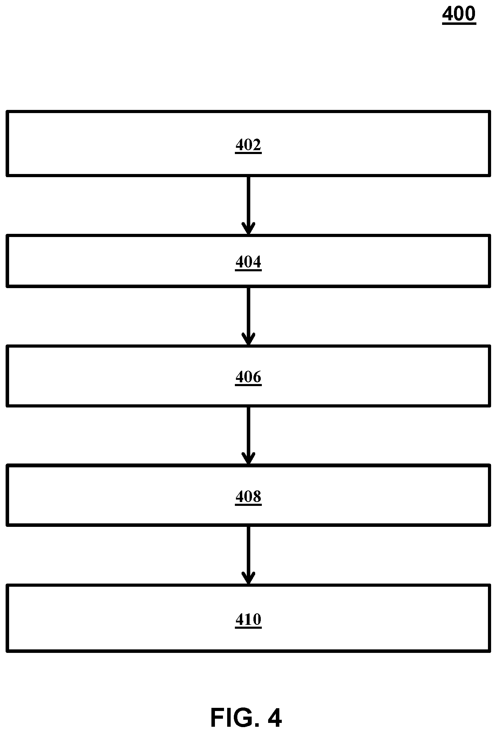

FIG. 3 illustrates a schematic block diagram depicting the plurality of modules 120 for rendering the at least one perception of interest 172 in the XR session, according to an embodiment of the present invention. The plurality of modules 120 may include a perception-identifying module 122, a user-determining module 124, a perception-consolidating module 126, a Model Decomposition (MC) module 128, a perception of interest determining module 130, a user-managing module 132, a user-tracking module 134, a perception-modifying module 136, and a perception-rendering module 138. In an embodiment, the plurality of modules 120 may be configured to perform various operations or steps that may be discussed and explained in detail in conjunction with FIGS. 4-6.

In one embodiment of the present invention, the HMD device 160 is an apparatus for rendering the at least one perception of interest 172 in the XR session in real-time. The apparatus may include the memory 102, the one or more processors communicatively coupled to the memory 102. The memory 102 may include programmable instructions which, when executed by the one or more processors 104, cause the one or more processors 104 to perform the steps discussed and explained in conjunction with FIGS. 4-6.

Further, the present invention also contemplates a computer-program product that includes instructions or receives and executes instructions responsive to a propagated signal. Further, the instructions may be transmitted or received over the network via a communication port or interface or using a bus (not shown). The communication port or interface may be a part of the one or more processors 104 or may be a separate component. The communication port may be created in software or may be a physical connection in hardware. The communication port may be configured to connect with the network, external media, the display, or any other components in the system 100. The connection with the network may be a physical connection, such as a wired ethernet connection, or may be established wirelessly. Likewise, the additional connections with other components of the system 100 may be physical or may be established wirelessly. The network may alternatively be directly connected to the bus. For the sake of brevity, the architecture, and standard operations of the memory 102 and the one or more processors 104 are not discussed in detail.

In an embodiment, the computer-program product, having machine-readable instructions stored therein, when executed by the one or more processors 104, causes the one or more processors 104 to perform the method for rendering the at least one perception of interest 172. The details on the method(s) performed by the one or more processors 104 have been elaborated in subsequent paragraphs at least with reference to FIGS. 4-6.

Further, the present invention also contemplates a non-transitory computer-readable medium encoded with executable instructions. The executable instructions, when executed by the one or more processors 104, cause the one or more processors 104 to perform a method of rendering the at least one perception of interest 172 in the XR session. The details on the method(s) performed by the one or more processors 104 have been elaborated in subsequent paragraphs at least with reference to FIGS. 4-6. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

The present invention is now explained in detail in conjunction with FIGS. 4-6.

FIG. 4 illustrates a flowchart depicting an exemplary method 400 for rendering the at least one perception of interest 172 in the XR session, according to an embodiment of the present invention. In an embodiment, the method 400 is a computer implemented method executed by the one or more processors 104 of the system 100. Preferably, the steps of the method 400 may be performed by the plurality of modules 120 of the one or more processors 104.

At step 402, the method 400 may include identifying, via the perception-identifying module 122, one or more first perceptions of the at least one object 170 based on capturing the at least one object 170 by the at least one capturing device 180. The one or more first perceptions are indicative of a plurality of views associated with the at least one object 170. The plurality of views may include but is not limited to, a front view, a back view, a top view, a bottom view, a perspective view, a three-dimensional (3D) view, and a two-dimensional (2D) view. In an embodiment, the at least one capturing device 180 may be configured to capture or scan the at least one object 170 to create a 2D or a 3D model. In an embodiment, the one or more processors 104 may be configured to receive captured data associated with the at least one object 170 from the at least one capturing device 180. Preferably, the captured data is processed, by the one or more processors 104, to create the 3D model of the at least one object 170.

In an advantageous effect, the identification of the one or more first perceptions may ensure the displaying of perceptions of the at least one object 170 in the XR session rather than views of other objects present in the real-world scene.

In an exemplary scenario, a defect may be present in an aircraft, then the perception-identifying module 122 may identify one or more first perceptions of the aircraft.

Referring to FIG. 4, at step 404, the method 400 may include determining, via the user-determining module 124, the one or more users 150 associated with the one or more first perceptions based on correlating a plurality of predefined users and the one or more first perceptions. In an embodiment, the "plurality of predefined users" herein refers to experts from a plurality of industries or virtual guests who are associated with the plurality of industries. The plurality of predefined users is stored in the database 106 of the memory 102. In various embodiments, user personas associated with the plurality of predefined users are stored in the database 106 of the memory 102.

In an advantageous effect, the user-determining module 124 may determine the one or more users 150 being the experts or skilled persons in the field associated with the at least one object 170. The at least one object 170 may be displayed in the one or more first perceptions.

In an exemplary scenario, the one or more perceptions may be of a wind turbine. In an embodiment, the user-determining module 124 may determine the one or more users 150 such as engineers, technicians, etc., associated with the wind turbine.

In an embodiment, the system 100 may enable the one or more users 150 to remotely view the 3D view of the at least one object 170 in the HMD device 160 associated with each of the one or more users 150. In another embodiment, the at least one object 170 may be viewed on an electronic display screen of the one or more display devices that shows images or video of the at least one object 170.

In an exemplary embodiment, the one or more users 150 are determined based on a request received from a field user located in the real-world scene associated with the at least one object 170. For example, the field user may be a novice or local technician capable of performing one or more operations such as performing repair or maintenance work on the at least one object 170. During the repair or maintenance work, the field user may wish to consult with the one or more users 150 that are associated with the at least one object 170. In an advantageous aspect, the system 100 may enable the one or more users 150 to provide instructions to the field user or enable the one or more users 150 to perform supervision remotely on the at least one object 170.

In various embodiments, the field user may wear the HMD device 160 which may allow the field user to view a direct view of the real-world scene. In another, the HMD device 160 may allow the field user to view a virtual view of the real-world scene. In various embodiments, each of the one or more users 150 also wears the HMD device 160, thereby enabling the one or more users 150 and the field user to view the virtual view together.

In another exemplary embodiment, the one or more operations in the real-world may be performed by a robotic device that may be controlled by the one or more users 150. In an advantageous aspect, this may reduce a cost for the field user.

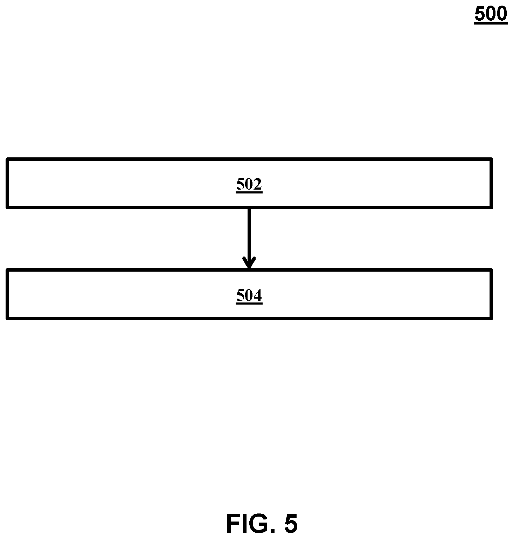

Referring to step 404, the correlating of the plurality of predefined users and the one or more first perceptions is explained in conjunction with FIG. 5.

FIG. 5 illustrates a flowchart depicting sub-steps for correlating the plurality of predefined users and the one or more first perceptions, according to an embodiment of the present invention. At sub-step 502, step 500 of correlating, may include obtaining, from the database 106, the plurality of predefined users and associated user personas for each of the plurality of predefined users. At sub-step 504, the step 500 may further include mapping the one or more first perceptions and the user personas associated with the plurality of predefined users using a machine learning model, thereby correlating the plurality of predefined users and the one or more first perceptions based on the mapping.

In an advantageous aspect, the correlation may enable the determination of the one or more users 150 for each of the one or more first perceptions. This may enable filtration of only those users who are experts in the field of the at least one object 170 or components thereof. Preferably, this may eliminate other users such as guests of a virtual expo.

In an exemplary scenario, the one or more users 150 are determined based on an industry or role associated with each of the one or more first perceptions. For example, a motor perception may be relevant to a technician or expert associated with the motor. Therefore, the machine learning model may correlate in such a way that the one or more users 150 having expertise in the field of the motor may be determined.

In one embodiment of the present invention, one or more users 150 are represented by avatars in the XR session. In an embodiment, the avatars are marked, via the user-managing module 132, that are associated with the one or more users 150 viewing the at least one perception of interest 172 in the HMD device 160 associated with each of the one or more users 150. In some implementations, the user-managing module 132 may be configured to receive instructions from the one or more users 150 via one or more controllers associated with the one or more users 150. In an embodiment, the instructions may include but are not limited to moving the avatars in the XR session, performing tasks in the XR session. The tasks may include interacting with the avatars of other users, or the objects present in the real-world scene that are rendered in the XR session, etc. The one or more controllers may include but are not limited to joysticks, mouse, keyboards, etc. Advantageously, the one or more controllers may allow the one or more users 150 to engage in the XR sessions to provide input in the XR session. The input may include performing the tasks, interacting with the one or more users 150, or the like.

In an advantageous aspect, the marking of the avatars may enhance engagement by serving as a visual representation of the one or more users 150 in the XR session. Further, the marking of the avatars may provide a level of anonymity, enabling the one or more users 150 to interact without revealing an identity of the one or more users 150. Furthermore, the marking of the avatars may enable the identification of the role of the one or more users 150.

In an exemplary scenario, the motor technician may be marked with a red color, and a rotor blade technician may be marked with a blue color. This may enable the one or more users 150 or the field user to communicate with a user of interest by viewing the marking of the one or more users 150.

Again, referring to step 402, in another embodiment, identifying the one or more first perceptions may include capturing the real-world scene, by the at least one capturing device 180, to create the 2D or the 3D model. In an embodiment, the one or more processors 104 may be configured to receive captured data associated with the real-world scene from the at least one capturing device 180. Preferably, the captured data is processed, by the one or more processors 104, to create the 3D model of the real-world scene and a list of predefined perceptions associated with the 3D model of the real-world scene. In the embodiment, the list of perceptions is stored in the database 106 of the memory 102. In an embodiment, the list of predefined perceptions associated with the real-world scene is obtained from the database 106. Preferably, the one or more first perceptions are identified from the list of predefined perceptions by the one or more users 150. More specifically, the perception-identifying module 122 may be configured to identify the one or more first perceptions from the list of predefined perceptions based on input. The input may be received via the one or more controllers associated with each of the one or more users 150. In an embodiment, the input may include a user response based on a display of the list of predefined perceptions.

In an advantageous aspect, this may enable the one or more users 150 to select the one or more first perceptions of the at least one object from the list of the predefined perceptions, thereby enhancing the user experience.

In an exemplary scenario, the wind turbine among a plurality of wind turbines may not be working. In an embodiment, the at least one capturing device 180 may capture the real-world scene that may create the list of predefined perceptions of the real-world scene. The list of predefined perceptions may include perceptions of a plurality of wind turbines, an area around the wind turbines, and items around the wind turbines. The perceptions are displayed on the HMD device 160, thereby enabling the one or more users 150 to manually identify the one or more first perceptions associated with the wind turbine that may not be working.

Again, referring to FIG. 4, at step 406, the method 400 may include creating, via the perception-consolidating module 126, at least one unified perception by combining the one or more first perceptions associated with each of the one or more users 150. In an exemplary embodiment, the one or more first perceptions are unified based on the role of the one or more users 150 using the machine learning model. More specifically, the machine learning module uses a matching algorithm that matches the role associated with each of the one or more users 150 and each of the one or more first perceptions.

In an advantageous aspect, the at least one unified perception may be created to minimize the number of the one or more perceptions. This may enable management of the one or more perceptions to ensure the rendering of the at least one perception of interest 172 efficiently.

In an exemplary scenario, the defect is detected in the motor of the wind turbine. In an exemplary scenario, the one or more first perceptions may include a front view, a top view, or a perspective view of the at least one object 170. The one or more users 150 include user A, user B, and user C. The user A is a motor technician, user B is a rotor blades technician, and the user C is a hub technician. Then the at least one unified perception may be a front view of the at least one object 170 as illustrated in Table-1. The front view of the at least one object 170 may be a common for all three users.

**Table-1**

| Perceptions | Users |
|---|---|
| Front view | User A, User B, and User C |
| Top view | User B and User C |
| Perspective view | User A and User C |
| Unified Perception is Front view | |

At step 408, the method 400 may include determining, via the perception of interest determining module 130, the at least one perception of interest 172 based on the at least one unified perception. In an embodiment, the at least one perception of interest 172 is indicative of a view of at least one targeted component associated with the at least one object 170.

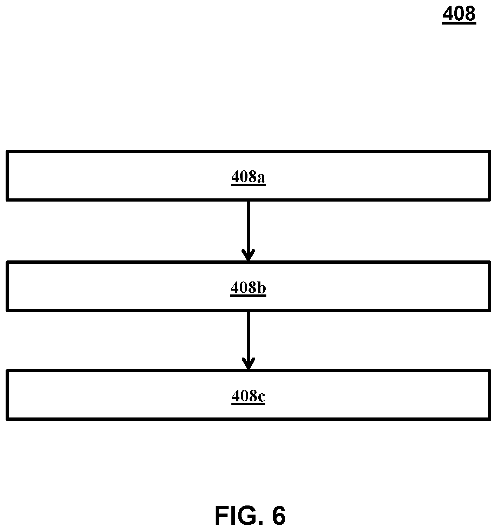

Preferably, the determining of the at least one perception of interest 172 is explained in conjunction with FIG. 6.

FIG. 6 illustrates a flowchart depicting sub-steps for determining the at least one perception of interest 172, according to an embodiment of the present invention.

At sub-step 408a, the step 408 may include creating a plurality of second perceptions based on splitting the at least one unified perception associated with the at least one object 170 using the machine learning model. In an exemplary embodiment, the plurality of second perceptions may include one or more components of the at least one object 170. Preferably, the machine learning model may implement the Model Decomposition (MC) module 128 to perform various operations such as resize, normalization, or noise reduction on the at least one unified perception. Further, one or more features of the at least one unified perception are extracted. Thereafter, the Model Decomposition (MC) module 128 may classify the one or more components from the at least one unified perception to create the plurality of second perceptions. For example, the one or more components may include but are not limited to motor, rotor blades, hubs, gears, and controllers of the wind turbine.

At sub-step 408b, the step 408 may include identifying the at least one targeted component from the plurality of second perceptions based on processing each of the plurality of second perceptions using the machine learning model. The machine learning model may implement an object recognition model for recognizing at least one target component from the one or more second perceptions. Preferably at first, the machine learning model may detect the targeted component that may be required to be identified based on an objective of the rendering. For example, if the objective of the rendering is to provide instructions for performing repair in the motor, then the motor is identified as the targeted component.

In an advantageous aspect, the identification of the at least one targeted component may ensure that the one or more users 150 focus on the at least one targeted component, rather than entire of the at least one object 170. Thus, reducing time for performing tasks and enhancing performance of the task.

In an exemplary scenario, if a fault may occur in the wind turbine, then the objective may be to detect a component of the wind turbine on which the fault may occur. More specifically, the machine learning model may detect the type of the fault. Thereafter, information related to the one or more components is retrieved from the database 106. The information may include one or more faults that may occur in each of the one or more components. Further, the information associated with each of the one or more components is mapped with the type of fault, thereby enabling detection of the targeted component based on the mapping. Further, features of the detected at least one targeted component are mapped with features of the one or more components, thereby enabling the identification of the at least one targeted component from the one or more second perceptions.

At sub-step 408c, the step 408 may include determining the at least one perception of interest 172 associated with the at least one targeted component based on the identification. In an advantageous aspect, the determination of the least one perception of interest associated with the at least one targeted component may enable the one or more users 150 to view the at least one targeted component from a specific view or angle. This may result in solving a problem associated with the at the at least one targeted component in an effective way.

In an exemplary scenario, if the defect is detected in the motor, then the motor may be determined as the at least one targeted component. In an embodiment, the defect may be viewed from the back side of the motor, then a back view of the motor may be referred to as the at least one perception of interest 172.

Again, referring to FIG. 4, at step 410, the method 400 may include rendering, via the perception-rendering module 138, the at least one perception of interest 172 on the HMD device 160 associated with each of the one or more users 150 in the XR session in real-time. In another embodiment, the perception of interest may be rendered on the one or more display devices such as (not shown in figures) other than the HMD device 160 as discussed in the above paragraphs.

In an advantageous aspect, the rendering of the at least one perception of interest 172 may allow the one or more users 150 to examine the at least one targeted component effectively. And, thereby enabling the one or more users 150 to provide input corresponding to the at least one targeted component. Preferably, the input may include but be limited to providing instructions to the field user. This may enhance the user experience and ensure the sustainability of the present invention.

In an exemplary scenario, the defect may be detected in the motor of the wind turbine. A local technician may need guidance during the repair of the motor of the wind turbine. The system 100 may render the perception of the motor in the XR session, and based on that, one or more users 150 who are experts may provide guidance on steps that may be required to perform for repairing the motor. The one or more users 150 may provide visual guidance or may use generic guidance content using features such as arrows, highlights, basic shapes, and animations, by drawing with a finger or mouse, etc. via the one or more controllers.

In another exemplary scenario, in a failure of the motor of a feed drive of a milling machine a field user or local technician may request for remote expert support. In this scenario, both the technician and the expert would be observing the motor and eliminating perceptions of the entire milling machine or the feed drive.

In various embodiments, the method 400 may include modifying, the perception-modifying module 136, the at least one perception of interest 172 based on tracking movement of the one or more users 150 by at least one sensing device, such that the modified at least one perception of interest 172 includes an alternative view of the at least one targeted component. In an embodiment, the alternative view may include a perception of another component of the at least one object 170. Preferably, the user-tracking module 134 may be configured to track the movement of the one or more users 150 based on sensing data obtained by the at least one sensing device. In an embodiment, the at least one sensing device may be installed in the one or more controllers or the HMD device 160. In an exemplary embodiment, the at least one sensing device may be configured to track gestures of the one or more users 150 such as hand gestures or the like.

In an advantageous aspect, the modification of the at least one perception of interest 172 may ensure the rendering of the alternative view of the at least one targeted component or another component to achieve the final objective of the rendering.

In an exemplary scenario, if the fault is detected in the motor but the one or more users 150 may want to view a perception of the rotor blades for inspecting the fault associated with the motor. Thereafter, the one or more users 150 change the direction of their eyes to view the rotor blades, and accordingly the at least one sensing device may sense the direction of the eyes. Further, the one or more processors 104 may compute sensing data to modify the perception of the motor to the perception of the rotor blades in the XR session in real-time.

The following use case illustrates various embodiments of the present invention.

In a use case, one or more embodiments of the present disclosure may allow for immediate deployment of the method 400. For example, the field user may request the support of the one or more users 150 while repairing the motor of the wind turbine. In an embodiment, the system 100 may allow determination of the one or more users 150 who are experts in the field of wind turbines. Thereafter, the most suitable perception of the motor is rendered in the XR session. This may allow the one or more users 150 provide their expertise to the field user. For example, the one or more users 150 may present visual representation of performing repair of the motor of the wind turbine.

The present invention provides for various technical advancements based on the key features discussed above.

The disclosed method and the system may enable the creation of the at least one unified perception, thereby reducing resource utilization without affecting user experience or usability.

Further, the disclosed method and the system enable the identification of the at least one targeted component. Thus, enabling the one or more users 150 to focus on the at least one targeted component of the at least one object 170, rather than the entire of the at least one object 170.

Furthermore, the disclosed method and the system enable the determination of the at least one perception of interest 172 associated with the at least one targeted component. This may enable the one or more users 150 to view the at least one targeted component from a specific view or angle, thereby reducing time and enhancing the performance of an overall system of the present invention. For example, where the fault occurs in the motor of the wind turbine, there is no need to render or observe the blades or other parts. Even when looking at the motor, only perception of interest such as a few angles of the motor may be rendered in the HMD device 160.

Moreover, the disclosed method and the system may enable rendering of the at least one perception of interest 172, thereby reducing latency for large models such as aircraft, the wind turbines, etc. This may enhance the user experience and ensure the sustainability of the present invention.

In addition, the disclosed method and the system may reduce the resource utilization in creating the XR session of the present invention while still providing a desired functionality, thereby making the system 100 more sustainable and environmentally friendly.

In a nutshell, the disclosed method and the system may be capable of rendering the at least one perception of interest 172 in the XR session in an effective and cost-efficient way.

In various embodiments, the present invention may be across an industrial environment such as such as automobile industries, aircraft industries, or the like. However, a person skilled in the art would understand that the concepts disclosed herein may also be applied across multiple domains such as finance, marketing, legal, medicine, etc.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein may be practiced with modification within the scope of the embodiments as described herein.

### List of Reference Numerals

| | |
|---|---|
| Environment | 1000 |
| System | 100 |
| Method | 400 |
| Method steps | 402, 404, 406, 408, 410, 500 |
| Method sub-steps | 408a, 408b, 408c, 502, 504 |
| One or more users | 150 |
| Head-mounted display (HMD) device | 160 |
| At least one object | 170 |
| At least one capturing device | 180 |
| At least one perception of interest | 172 |
| Memory | 102 |
| One or more processors | 104 |
| Database | 106 |
| Operating system | 108 |
| Input/output (I/O) interface | 110 |
| Plurality of modules | 120 |
| Perception-Identifying module | 122 |
| User-Determining module | 124 |
| Perception-Consolidating module | 126 |
| Model-Decomposition (MC) module | 128 |
| Perception of Interest Determining module | 130 |
| User-Managing module | 132 |
| User-Tracking module | 134 |
| Perception-Modifying module | 136 |
| Perception-Rendering module | 138 |

## Claims

1. A computer-implemented method (400) for rendering at least one perception of interest (172) in an Extended Reality (XR) session in real-time, the method (400) comprising:
identifying, by one or more processors (104), one or more first perceptions of at least one object (170) based on capturing the at least one object (170) by at least one capturing device (180), wherein the one or more first perceptions are indicative of a plurality of views associated with the at least one object (170);
determining, by the one or more processors (104), one or more users (150) associated with the one or more first perceptions based on correlating a plurality of predefined users and the one or more first perceptions;
creating, by the one or more processors (104), at least one unified perception by combining the one or more first perceptions associated with each of the one or more users (150);
determining, by the one or more processors (104), the at least one perception of interest (172) based on the at least one unified perception, wherein the at least one perception of interest (172) is indicative of a view of at least one targeted component associated with the at least one object (170); and
rendering, by the one or more processors (104), the at least one perception of interest (172) on a head-mounted display (HMD) device (160) associated with each of the one or more users (150) in the XR session in real-time.

2. The computer-implemented method (400) according to claim 1, wherein identifying one or more first perceptions comprises:
obtaining a list of predefined perceptions associated with a real-world scene based on capturing the real-world scene by the at least one capturing device (180); and
identifying the one or more first perceptions associated with the at least one object (170) from the list of predefined perceptions based on input received via one or more controllers associated with each of the one or more users (150).

3. The computer-implemented method (400) according to any of the preceding claims, wherein correlating the plurality of predefined users and the one or more first perceptions comprises:
obtaining, from a database (106), the plurality of predefined users and associated user personas for each of the plurality of predefined users; and
mapping the one or more first perceptions and the user personas associated with the plurality of predefined users using a machine learning model, thereby correlating the plurality of predefined users and the one or more first perceptions.

4. The computer-implemented method (400) according to any of the preceding claims, wherein determining the at least one perception of interest (172) comprises:
creating a plurality of second perceptions based on splitting the at least one unified perception associated with the at least one object (170) using the machine learning model, wherein the plurality of second perceptions includes views of one or more components of the at least one object (170);
identifying the at least one targeted component from the plurality of second perceptions; and
determining the at least one perception of interest (172) associated with the at least one targeted component based on the identification.

5. The computer-implemented method (400) according to any of the preceding claims further comprising:
modifying the at least one perception of interest (172) based on tracking movement of the one or more users (150) by at least one sensing device, such that the modified at least one perception of interest (172) includes an alternative view of the at least one targeted component.

6. The computer-implemented method (400) according to any of the preceding claims comprising:
marking avatars associated with the one or more users (150) viewing the at least one perception of interest (172) in the HMD device (160).

7. The computer-implemented method (400) according to any of the preceding claims, wherein the method (400) is implemented in any of, aircraft, wind turbine, and ship.

8. The computer-implemented method according to any of the preceding claims, wherein the at least one capturing device (180) is in communication with the HMD device (160) and the one or more controllers.

9. An apparatus for rendering at least one perception of interest (172) in an Extended Reality (XR) session in real-time, the apparatus comprising:
a memory; and
one or more processors (104) communicatively coupled to the memory,
wherein the memory comprises programmable instructions which, when executed by the one or more processors (104), cause the one or more processors (104) to perform the method steps of claims 1 to 8.

10. A system 100 for rendering at least one perception of interest (172) in an Extended Reality (XR) session in real-time, the system 100 comprising:
a memory; and
one or more processors (104) communicatively coupled to the memory, wherein the memory comprises programmable instructions which, when executed by the one or more processors (104), cause the one or more processors (104) to: identify one or more first perceptions of at least one object (170) based on capturing the at least one object (170) by at least one capturing device (180), wherein the one or more first perceptions are indicative of a plurality of views associated with the at least one object (170);
determine one or more users (150) associated with the one or more first perceptions based on correlating a plurality of predefined users and the one or more first perceptions;
create at least one unified perception by combining the one or more first perceptions associated with each of the one or more users (150);
determine the at least one perception of interest (172) based on the at least one unified perception, wherein the at least one perception of interest (172) is indicative of a view of at least one targeted component associated with the at least one object (170); and
render the at least one perception of interest (172) on a head-mounted display (HMD) device (160) associated with each of the one or more users (150) in the XR session in real-time.

11. The system 100 according to claim 10, wherein to correlate the plurality of predefined users and the one or more first perceptions, the one or more processors (104) execute the programmable instructions to:
obtain, from a database (106), the plurality of predefined users and associated user personas for each of the plurality of predefined users; and
map the one or more first perceptions and the user personas associated with the plurality of predefined users using a machine learning model, thereby correlating the plurality of predefined users and the one or more first perceptions.

12. The system 100 according to any of the preceding claims, wherein to determine the at least one perception of interest (172), the one or more processors (104) execute the programmable instructions to:
create a plurality of second perceptions based on splitting the at least one unified perception associated with the at least one object (170) using the machine learning model, wherein the plurality of second perceptions includes views of one or more components of the at least one object (170);
identify the at least one targeted component from the plurality of second perceptions; and
determine the at least one perception of interest (172) associated with the at least one targeted component based on the identification.

13. A computer-program product, having machine-readable instructions stored therein, which when executed by one or more processors (104), cause the one or more processors (104) to perform a method according to any of the claims 1 to 8.

14. A non-transitory computer-readable medium encoded with executable instructions which, when executed by one or more processors (104), cause the one or more processors (104) to perform a method according to any of the claims 1 to 8.
